# EUROPÄISCHE PATENTANMELDUNG

(11) **EP 0 936 480 A2**
(43) Veröffentlichungstag der Anmeldung: **18.08.1999**
(21) Anmeldenummer: 99440018.2
(22) Anmeldetag: 29.01.1999
(51) Int. Cl.: G02B 6/13

(54) **Planarer optischer Wellenleiter und Verfahren zu seiner Herstellung**

(30) Priorität: 10.02.1998 DE 9805170 U
(71) Anmelder: ALCATEL, 75008 Paris (FR)
(72) Erfinder: Weber, Dieter, 70806 Kornwestheim (DE)
(74) Vertreter: Rausch, Gabriele, Dr.

(57) **Zusammenfassung**

Bekannt ist, zur Herstellung planarer optischer Wellenleiter mehrere Glasschichten auf einem Siliziumwafer aufzubringen. Dazu werden mittels Flammhydrolyse feine Glaspartikel auf dem Wafer verteilt und anschließend bei hohen Temperaturen zu einer zusammenhängenden Schicht verglast. Aufgrund unterschiedlicher thermischer Ausdehnungskoeffizienten kommt es beim Erkalten zu einer Krümmung der Siliziumwafer. Diese Krümmung wirkt sich nachteilig auf die folgenden Prozeßschritte und die Qualität der Lichtführung in den optischen Wellenleitern aus.

Um diese Krümmung zu vermeiden, ist erfindungsgemäß vorgesehen, unmittelbar auf dem Siliziumwafer (SUB) eine Zwischenschicht (ZS) aufzubringen, deren thermischer Ausdehnungskoeffizient größer ist als der des Siliziumwafers und der auf der Zwischenschicht aufzutragenden untersten Glasschicht ("Pufferschicht, PS). Als Material für diese Zwischenschicht bietet sich wegen seines hohen Schmelzpunktes insbesondere Aluminiumoxid (Al₂O₃) an.

## Beschreibung

Die Erfindung betrifft einen planaren optischen Wellenleiter nach dem Oberbegriff des Anspruchs 1 sowie ein Verfahren zur Herstellung eines planaren optischen Wellenleiters nach dem Oberbegriff des Anspruchs 4.

In integrierten optischen Schaltungen, z. B. optischen Verzweigern oder Mach-Zehnder-lnterferometern, wird das Licht in planaren optischen Wellenleitern geführt. S. H. Houde-Walter beschriebt in *Optics* & *Photonics* News, June 1994, S. 8 - 12, den typischen Aufbau derartiger optischer Wellenleiter. Auf einem als Träger dienenden Silizium-Substrat ist eine Pufferschicht aufgebracht, über der sich eine mit Hilfe von Ätzprozessen strukturierte Kernschicht befindet. Die strukturierten Kernschicht ist von einer Deckschicht bedeckt. Der Brechungsindex der Kernschicht ist höher als derjenige der Puffer- und der Deckschicht, so daß in die Kernschicht eingekoppeltes Licht aufgrund von Totalreflektion an den Grenzflächen im wesentlichen in der Kernschicht geführt wird.

Als Materialien für die Puffer-, Kern- und Deckschicht verwendet man in der Regel Silikatgläser (SiO₂), die zur Einstellung eines definierten Brechungsindexes mit geeigneten Stoffen, z. B. Germanium oder Titan, dotiert werden. Ein besonders vorteilhaftes Verfahren zum Aufbringen von Glasschichten auf einem Substrat ist bekannt aus einem Aufsatz von M Kasachi et al. mit dem Titel "Fabrication of SiO₂-TiO₂ Glass Planar Optical Waveguides by Flame Hydrolysis Deposition", Electronic Letters, July 1983, Vol. 19, No. 15, Seiten 583-584. Bei dem dort beschriebenen Verfahren werden mit Hilfe einer Flamme feine Glaspartikel auf einem Substrat aufgebracht und anschließend in einem Ofen bei hoher Temperatur (ca. 1250 °C) zu einem homogenen Glas gesintert. Nach dem Erkalten wird die nächste Schicht aufgebracht, gesintert usw.

Wenn man als Substrat einen kristallinen Siliziumwafer verwendet, so stellt man fest, daß der Wafer nach dem Erkalten der Pufferschicht nicht mehr plan, sondern leicht gekrümmt ist. Die Krümmung des Siliziumwafers beim Sintern hat seine Ursache darin, daß Silizium einen etwa siebenfach größeren thermischen Ausdehnungskoeffizienten hat als Silikatglas (α_{Si} ≈ 3,5 · 10⁻⁶; α_{Silikat} ≈ 0,5 · 10⁻⁶). Wenn am Ende des Sintervorgangs die Pufferschicht verglast und damit fest geworden ist, so krümmt sich während des Erkaltungsvorgangs der Wafers konkav von der Pufferschicht weg. Bei einem typischen Wafer-Durchmesser von 4 Zoll und einer 50 µm dicken Pufferschicht beträgt die Krümmungshöhe etwa 240 µm.

Diese Krümmung bereitet zum einen erhebliche Probleme bei der Strukturierung der daraufliegenden Kernschicht. Zum anderen sind die nach der Strukturierung der Kernschicht übrigbleibenden, meist nur wenige µm breiten Stege infolge der Krümmung des Wafers einer Verspannung ausgesetzt, wodurch sich der Brechungsindex in den Stegen in unerwünschter Weise verändert. Als Folge davon breiten sich TE- und TM-Moden mit unterschiedlichen Laufzeiten aus, was nur durch aufwendige Hilfsmittel, z. B. Einbau von λ/2-Plättchen, kompensiert werden kann.

Dieses Problem läßt sich auch nicht einfach durch die Verwendung anderer Substratmaterialien umgehen. So ist selbst bei Glassubstraten beobachtet worden, daß sich das Substrat zusammen mit einer darauf aufgebrachten Glas-Pufferschicht nach Wärmeeinwirkung dauerhaft verzieht. In der EP-A2-793 122 wird beispielsweise vorgeschlagen, zur Vermeidung dieses Effekts ein Glassubstrat zu verwenden, das einen besonders niedrigem Gehalt an Hydroxyl-Gruppen hat.

Es ist daher Aufgabe der Erfindung, einen planaren optischen Wellenleiter anzugeben, bei dessen Herstellung eine Krümmung des den planaren optischen Wellenleiter tragenden Substrats weitgehend vermieden wird. Es ist ferner Aufgabe der Erfindung, ein hierfür geeignetes Herstellungsverfahren anzugeben.

Die Erfindung löst diese Aufgaben mit Hilfe der in Anspruch 1 bzw. der in Anspruch 4 angegebenen Merkmale.

Erfindungsgemäß ist vorgesehen, daß zwischen dem Substrat und der für die Lichtführung vorgesehenen Anordnung von Glasschichten eine Zwischenschicht ist, die einen größeren thermischen Ausdehnungskoeffizienten hat als das Substrat und die Pufferschicht. Während des Erkaltens nach dem Sintern möchte sich diese Zwischenschicht sowohl vom Substrat als auch von der Pufferschicht wegkrümmen. Beide Einflüsse kompensieren sich jedoch, so daß die Zwischenschicht die Wärmespannungen aufnimmt, ohne daß es dabei zu einer Krümmung kommt.

Vorzugsweise besteht diese Zwischenschicht aus Aluminiumoxid (Al₂O₃), welches besonders günstige Eigenschaften bei der Verarbeitung hat. Desweiteren hat dieses Material den Vorteil, im Bereich der üblicherweise in integrierten optischen Schaltungen verwendeten Lichtwellenlängen transparent zu sein. Somit kommt es zu keiner unerwünschten zusätzlichen Dämpfung des im planaren optischen Wellenleiter geführten Lichts.

Weitere vorteilhafte Ausgestaltungen der Erfindung sind den Unteransprüchen entnehmbar.

Die Erfindung wird nachfolgend anhand der Ausführungsbeispiele und der Zeichnungen eingehend erläutert. Es zeigen:
Fig. 1: Eine Prinzipskizze zur Erläuterung der Funktionsweise der Erfindung;
Fig. 2: Einen erfindungsgemäßen planaren optischen Wellenleiter.

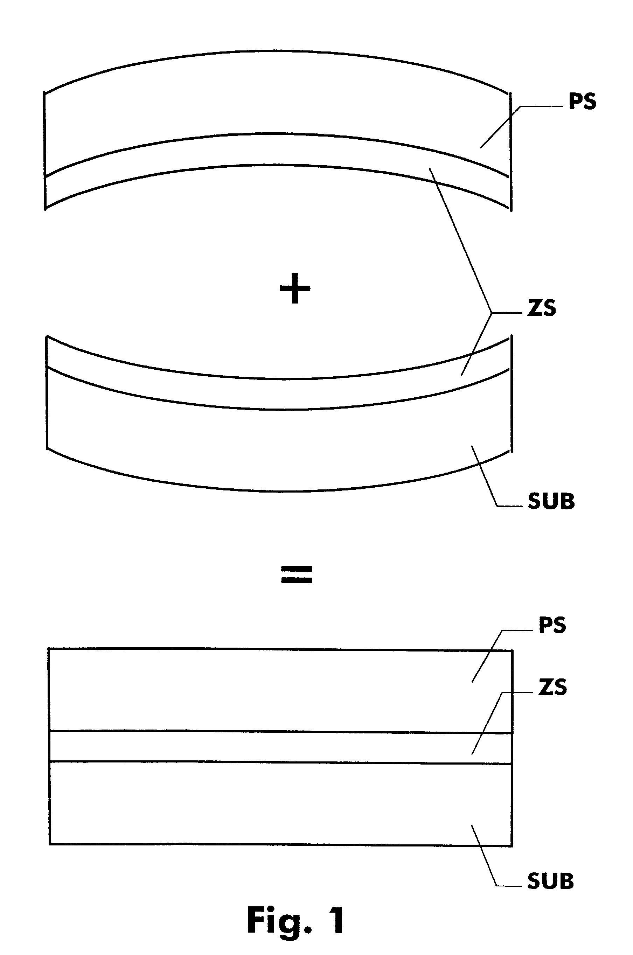

Die Funktionsweise der Erfindung wird nachfolgend anhand der Fig. 1 erläutert. Ganz oben auf der Figur ist eine Pufferschicht PS dargestellt, die mit einer Zwischenschicht ZS verbunden ist. Da erfindungsgemäß die Zwischenschicht ZS einen höheren thermischen Ausdehnungskoeffizienten besitzt als die Pufferschicht PS, krümmt sich der Verbund aus beiden Schichten während des sich an eine Wärmezufuhr anschließenden Erkaltens konkav zur Zwischenschicht ZS hin. In Fig. 1 ist diese Krümmung stark übertrieben dargestellt.

In der Mitte der Fig. 1 ist ein Substrat SUB dargestellt, welches ebenfalls mit einer Zwischenschicht ZS verbunden ist. Erfindungsgemäß hat die Zwischenschicht auch einen höheren thermischen Ausdehnungskoeffizienten als das damit verbundene Substratmaterial. Folglich krümmt beim Erkalten der Verbund beider Schichten genauso wie im oben dargestellten Fall konkav zur Zwischenschicht hin.

Wenn man sich nun vorstellt, daß die oben dargestellte Zwischenschicht ZS eins mit der in der Mitte dargestellten Zwischenschicht ZS ist, so entsteht der in Fig. 1 unten gezeigte Verbund aus einem Substrat SUB, einer Zwischenschicht ZS und einer Pufferschicht PS. Die in Fig. 1 darüber dargestellten Krümmungen heben sich bei diesem Verbund gleichsam gegenseitig auf, so daß der Verbund auch nach Wärmezufuhr und anschließendem Erkalten plan bleibt.

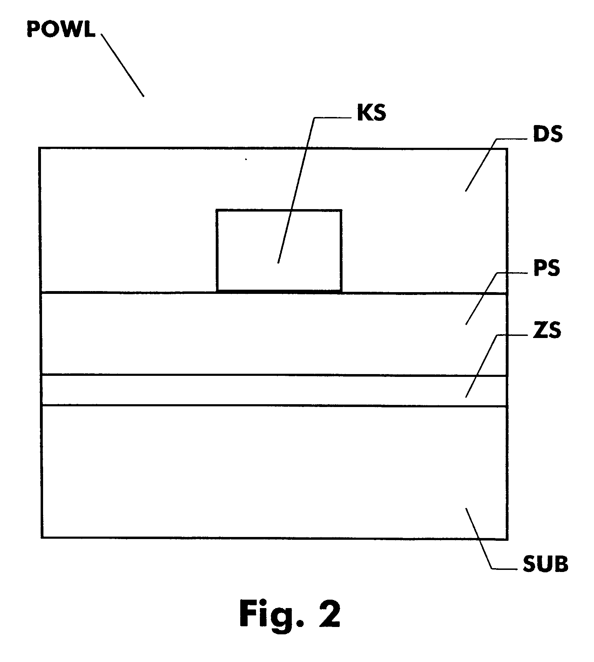

Fig. 2 zeigt einen erfindungsgemäßen planaren optischen Wellenleiter POWL. Auf einem aus kristallinem Silizium bestehendem Substrat SUB befindet sich eine Zwischenschicht ZS und darüber eine Pufferschicht PS. Als Substrat kann ebenso auch ein anderes Material, etwa Glas oder eine Keramik, verwendet werden. Die Zwischenschicht ZS hat erfindungsgemäß einen thermischer Ausdehnungskoeffizienten, der größer ist als der des Silizium-Substrats und der der darüberliegenden Pufferschicht PS. Auf der Pufferschicht sind wie bei bekannten planaren optischen Wellenleitern eine (strukturierte) Kernschicht KS und eine Deckschicht DS angeordnet, die den planaren optischen Wellenleiter nach oben hin abschließt.

Die Pufferschicht PS, die Kernschicht KS und die Deckschicht DS bestehen in diesem Ausführungsbeispiel aus Silikatglas. Geeignet sind jedoch auch andere Arten von Gläsern. Die Kernschicht kann beispielsweise auch aus einem Polymer hergestellt sein. Für die Zwischenschicht ZS sind grundsätzlich alle Materialien geeignet, deren thermischer Ausdehnungskoeffizienten größer ist als der des Substrats und der der darüberliegenden Pufferschicht PS.

Für Pufferschichten aus Silikatglas und Substraten aus Silizium hat sich gezeigt, daß eine Zwischenschicht aus Aluminiumoxid (Al₂O₃) diesen Anforderungen genügt. Aluminiumoxid hat zusätzlich den Vorteil, sehr gute Verarbeitungseigenschaften zu haben. So bleibt eine Aluminiumoxidschicht auch beim Sintern der darüberliegenden Silikatglasschichten im festen Zustand hart, da der Schmelzpunkt von Aluminiumoxid bei ca. 1800 °C liegt. Der thermische Ausdehnungskoeffizient von Aluminiumoxid beträgt etwa 6 · 10⁻⁶ und ist damit beinahe doppelt so groß wie der von Silizium und mehr als 10mal so groß wie der von Silikatglas. Ferner ist Al₂O₃ im Bereich der üblicherweise in integrierten optischen Schaltungen verwendeten Lichtwellenlängen transparent, so daß Licht, welches im planaren optischen Wellenleiter geführt wird, durch eine Zwischenschicht aus Al₂O₃ kaum gedämpft wird.

Zur Herstellung eines erfindungsgemäßen planaren optischen Wellenleiters wird nach einem bevorzugten Ausführungsbeispiel zunächst ein mit einer thermischen Oxidschicht bedeckter Siliziumwafer mit einer dünnen Aluminiumschicht versehen. Das Aluminium kann beispielsweise durch Sputtern aufgebracht werden. Die optimale Dicke der Aluminiumschicht hängt vom Verhältnis der thermischen Ausdehnungskoeffizienten von Aluminiumoxid, des Silizium-Substrats und der Pufferschicht ab. Empirisch läßt sich die optimale Dicke der Aluminiumschicht leicht ermitteln; bei einer gängigen Dimensionierung eines planaren optischen Wellenleiters liegt sie in der Größenordnung von ca. 150 bis 300 nm. Anschließend wird auf diese Aluminiumschicht mit Hilfe der Flammhydrolyse eine Pufferschicht aus Silikatglas aufgebracht. Die hierzu notwendigen Maßnahmen sind an anderer Stelle (siehe z. B. den eingangs zitierten Aufsatz von M. Kawachi et al.) eingehend beschrieben und werden daher an dieser Stelle nicht näher erläutert. Beim Sintern der Pufferschicht bei ca. 1300 °C in sauerstoffhaltiger Atmosphäre wandelt sich das Aluminium in Aluminiumoxid um. Die Kern- und die Deckschicht wird anschließend in an sich bekannter Weise aufgebracht.

## Patentansprüche

1. Planarer optischer Wellenleiter (POWL) mit einer Anordnung von Glasschichten (PS, KS, DS) zur Führung von Licht und mit einem diese Anordnung tragenden Substrat (SUB), **dadurch gekennzeichnet**, daß zwischen dem Substrat und der Anordnung von Glasschichten eine Zwischenschicht (ZS) ist, die einen größeren thermischen Ausdehnungskoeffizienten hat als das Substrat und als diejenige Glasschicht (PS) der Anordnung, die dem Substrat zugewandt ist.

2. Planarer optischer Wellenleiter nach Anspruch 1, bei dem die Zwischenschicht aus Al₂O₃ besteht.

3. Planarer optischer Wellenleiter nach einem der Ansprüche 1 oder 2, bei dem die Anordnung von Glasschichten eine Pufferschicht (PS), eine strukturierte Kernschicht (KS) und eine Deckschicht (DS) umfaßt.

4. Verfahren zur Herstellung eines planaren optischen Wellenleiters (POWL), umfassend die folgenden Schritte:
a) Bereitstellen eines Substrates (SUB), welches wenigstens eine im wesentlichen ebene Oberfläche hat,
b) Aufbringen einer Zwischenschicht (ZS) auf der wenigstens einen im wesentlichen ebenen Oberfläche des Substrats, wobei die Zwischenschicht einen größeren thermischen Ausdehnungskoeffizienten hat als das Substrat und als diejenige Glasschicht, die dem Substrat zugewandt ist,
c) Aufbringen einer zur Führung von Licht vorgesehenen Anordnung von Glasschichten (PS, KS, DS) auf der Zwischenschicht.

5. Verfahren nach Anspruch 4, bei dem die Zwischenschicht aus Al₂O₃ besteht.

6. Verfahren nach einem der Ansprüche 4 oder 5, bei dem die Glasschichten und/oder der Zwischenschicht mit Hilfe von Flammhydrolyse auf der wenigstens einen im wesentlichen ebenen Oberfläche des Substrats aufgebracht werden/wird.
